# EUROPÄISCHE PATENTSCHRIFT

(11) **EP 2 344 324 B1**
(45) Veröffentlichungstag und Bekanntmachung des Hinweises auf die Patenterteilung: **10.10.2012**
(21) Anmeldenummer: 09737781.6
(22) Anmeldetag: 30.03.2009
(51) Int. Cl.: B29D 30/72, B60C 13/00, B05C 5/02, B29C 41/00

(54) **Verfahren zur Herstellung eines Reifens für ein Kraftfahrzeug und Vorrichtung zur Durchführung dieses Verfahrens**
Method for producing a tire for a motor vehicle and device for carrying out the method
Procédé de fabrication d'un pneu pour un véhicule automobile et dispositif pour mettre en oeuvre ce procédé

(30) Priorität: 02.05.2008 DE 102008021928
(43) Veröffentlichungstag der Anmeldung: 20.07.2011
(73) Patentinhaber: Hinkelmann, Jörg, 37574 Einbeck (DE)
(72) Erfinder: Hinkelmann, Jörg, 37574 Einbeck (DE)
(74) Vertreter: Sobisch, Peter
(86) Internationale Anmeldenummer: PCT/EP2009/002307
(87) Internationale Veröffentlichungsnummer: WO 2009/132737

(56) Entgegenhaltungen:
- WO-A-00/72981
- US-A- 5 320 874

## Beschreibung

Die Erfindung bezieht sich auf ein Verfahren entsprechend dem Oberbegriff des Anspruchs 1. Sie bezieht sich ferner auf eine Vorrichtung entsprechend dem Oberbegriff des Anspruchs 10.

Es ist allgemein bekannt, die Seitenwandungen oder seitlichen Sichtflächen eines Reifens u. a. zum Zweck der Dekoration oder auch zu Informationszwecken einer Nachbehandlung zu unterziehen, beispielsweise durch Aufbringung einer Färbung oder auch durch Anbringung von Schriftzeichen. Es existieren unterschiedliche Techniken zur Durchführung dieser Behandlungen, die sich in der Zweckbestimmung, der Werkstoffwahl sowie der arbeitstechnischen Umsetzung unterscheiden.

Aus der DE 949 871 B ist es bekannt, die Flanken eines Reifens eines Kraftfahrzeugs mit einer Kunststofffolie zu überziehen, deren Zweck in der Darstellung eines Schutzes vor Beschädigungen, vor Sonnenlicht und vor Verschmutzungen jedoch auch darin besteht, Sichtflächen des Reifens zum Zweck der Dekoration einzufärben, beispielsweise unter Anpassung an die Farbe der Fahrzeugkarosserie. Zwischen der Kunststofffolie und dem Reifen kommt als Klebstoff eine Mischung aus Isocyanaten und Polyalkoholen bzw. Polyestern zum Einsatz, wobei durch Vulkanisation dieser im feuchten Zustand aufgetragenen Mischung eine haftfeste Verbindung zwischen der Folie und dem Reifen hergestellt ist. Alternativ zu der Verwendung einer vorgefertigten Folie kann eine solche auch durch Auftragen einer Mischung aus Isocyanaten und Polyestern entweder auf den fertig vulkanisierten Reifen oder eine Reifenrohlingsfläche gebildet werden, wobei unter Vulkanisationsbedingungen eine auf dem Reifen fest haftende Folie gebildet wird. Wesensmerkmal dieser bekannten Reifen ist somit stets eine stoffliche Inhomogenität zwischen dem Reifengrundkörper einerseits und der seitlichen Beschichtung andererseits.

Aus dem DE 75 20 958 U ist ein Fahrzeugreifen bekannt, dessen seitliche Wandungen aus Elastomerwerkstoffen bestehende vorgefertigte Schriftzeichen tragen, die mittels eines Klebstoffs oder durch Vulkanisation mit dem Reifen in Verbindung stehen. Diese Technik soll zur Reifenkennung dienen, jedoch auch dekorative Zwecke erfüllen.

Aus dem DE 195 26 695 C2 ist es bekannt, Schriftzeichen dadurch dauerhaft auf einem Reifen anzubringen, dass die Schriftzeichen mittels Laser oder durch Farbauftrag auf die eine Seite einer Kautschukplatte aufgebracht werden, die lediglich unterhalb der Schriftzeichen vorvernetzt, im Übrigen, dass heißt insbesondere auf ihrer Ober- und Unterseite hingegen nicht vorvernetzt ist, wobei eine Verbindung zwischen der Kautschukplatte und einem Reifen durch gemeinsames Vulkanisieren der Platte und einem Reifenrohling erreicht wird. Durch die teilweise Vorvernetzung der Kautschukplatte soll Verzerrungen der Schriftzeichen vorgebeugt werden, die ansonsten aufgrund der nachfolgenden Vulkanisation entstehen können.

Schließlich ist es aus der DE 10 2004 032 801 A1 bekannt, die Seitenflächen eines Reifens dadurch einzufärben, dass ein Ringkörper bestehend aus eingefärbtem Kunststoff durch Vulkanisation unter Zwischenanordnung einer Diffusionssperrschicht mit dem Reifen dauerhaft verbunden wird. Um eine Verbundwirkung zwischen der Reifenoberfläche und dem Ring zu verbessern, ist die dem Ring zugekehrte Fläche der Reifenseitenwandung strukturiert ausgebildet, beispielsweise aufgeraut oder geriffelt.

Wesensmerkmal dieser letztgenannten drei Varianten einer Modifizierung des Erscheinungsbilds der Sichtfläche eines Reifens ist, dass stets vorgeformte, ring- bzw. plattenartige oder auch Schriftzeichen unmittelbar nachbildende Bauteile hergestellt werden müssen, die anschließend mit dem Reifen verbunden werden.

Aus der EP 1 625 952 A1 ist es bekannt, auf der Seitenwand eines Reifens Schriftzeichen, Grafiken, dekorative Markierungen und dergleichen anzubringen, indem eine auch Farbträger enthaltende, vulkanisierfähige Mischung elastomerer Stoffe bereitgestellt wird, mittels einer, beispielsweise einen Druckkopf enthaltenden Auftragsvorrichtung auf die Seitenwand aufgetragen und anschließend durch Vulkanisation ein Verbund mit der Seitenwand hergestellt wird. Ein vergleichbares Verfahren ist auch aus dem Dokument US 3 623 900 A bekannt.

Aus der US 5 015 505 A ist ein weiteres Verfahren zum Aufbringen dekorativer Einfärbungen auf die Seitenwand eines Reifens und darüber hinaus eine Vorrichtung zur Durchführung dieses Verfahrens bekannt. Die den Einfärbungen zugrunde liegende Substanz ist eine Farbe auf der Basis von Polyurethan, welche in der Form von zu der Achse konzentrischer Streifen aufgetragen wird. Der zu behandelnde Reifen ist während des Auftragens auf einem Tisch um seine Achse drehbar eingespannt, wobei eine dem Farbauftrag dienende Düse ortsfest gehalten ist und wobei im Anschluss an den Farbauftrag eine diesen härtende bzw. vulkanisierende Behandlung stattfindet.

Charakteristisch für diese letztgenannten drei Dokumente ist, dass gemäß diesen in einem ersten Schritt ein vulkansierfähiger Farbträger auf die Reifenseitenwand aufgetragen und in einem zweiten Schritt eine vulkanisierende Behandlung durchgeführt wird.

Ferner ist aus der WO-A- 00/72981 eine Vorrichtung zum Aufbringen von Farbe auf die Seitenwand eines Reifens zu entnahmen.

Es ist die Aufgabe der Erfindung, ein Verfahren der eingangs genannten Art dahingehend auszugestalten, dass ein fertiger Reifen in einfacher Weise im Bereich seiner Seitenwandungen bzw. Sichtflächen dekorativ eingefärbt und/oder als Informationsträger genutzt wird. Gelöst ist diese Aufgabe bei einem solchen Verfahren durch die Merkmale des Kennzeichnungsteils des Anspruchs 1.

Erfindungswesentlich ist hiernach, dass eine wenigstens örtliche, zu dem Reifen im Übrigen optisch kontrastierende Einfärbung aus einem Kautschuk hergestellt wird, der im Ausgangszustand in der Form einer Dispersion bereitgestellt wird, in der der Kautschuk und ein Farbträger eine disperse Phase bilden, wobei der Kautschuk in unvernetzter Form vorliegt. Das Auftragen der so konditionierten Dispersion in der Form einer Schicht auf die Seitenwandung des Reifens findet unter Vulkanisationsbedingungen statt, so dass der Kautschuk schließlich ein Vulkanisat bildet und gleichzeitig eine zuverlässige Anbindung an den Reifen erfährt. Die Vulkanisationsbedingungen sind vorteilhafter mit der Maßgabe gewählt, dass die so dargestellte Beschichtung in ihren werkstofflichen Parametern dem Reifenwerkstoff zumindest angenähert sind. Der beschichtete Reifen kann somit als stofflich homogener Körper angesehen werden. Die Beschichtung kann dekorativer Art sein - sie kann jedoch auch eine Information vermitteln und in der Form eines Bild- oder Textfeldes angelegt sein.

Gemäß den Merkmalen des Anspruchs 2 ist die gesamte Seitenwandung des Reifens gleichförmig eingefärbt. Die Einfärbung kann dekorativer Art sein - sie kann auch eine Informations- bzw. Signalfunktion erfüllen.

Die Merkmale der Ansprüche 3 und 4 sind auf alternative, die Förderung der Dispersion in Richtung auf die zu beschichtende Seitenwandung des Reifens gerichtet.

Die Merkmale der Ansprüche 5 bis 7 sind auf Maßnahmen zur Erhöhung der Festigkeit der Beschichtung sowie zur weiteren Verbesserung deren Haftung auf der Reifenoberfläche gerichtet. Zusätzlich zu den genannten Faserelementen aus Metall oder Kunststoff können der Dispersion zur stofflichen Modifizierung des Kautschuks übliche Füllstoffe, Aktivatoren, Vulkanisationsbeschleuniger usw. beigefügt sein.

Die Merkmale der Ansprüche 8 und 9 sind auf vorteilhaft nutzbare Techniken zum Auftragen der Dispersion auf den Reifen gerichtet, die insbesondere dann zum Einsatz kommen können, wenn es darum geht, örtliche Einfärbungen in der Fläche zu strukturieren, nämlich zur Wiedergabe von Texten, Grafiken usw.

Es ist ferner die Aufgabe der Erfindung eine Vorrichtung der eingangs genannten Art zu konzipieren, welche einen einfachen Aufbau und eine zuverlässige Wirkungsweise aufweist. Gelöst ist diese Aufgabe bei einer solchen Vorrichtung durch die Merkmale des Kennzeichnungsteils des Anspruchs 10.

Erfindungswesentlich ist hiernach ein Kessel, innerhalb welchem Vulkanisierbedingungen darstellbar sind und der für einen diskontinuierlichen Betrieb eingerichtet ist. Wesentlich ist ferner, dass zu behandelnde Reifen innerhalb des Kessels horizontal auf einem, um eine vertikale Achse motorisch drehbaren Tisch aufliegend fixiert ist, so dass eine genaue Positionierung der aufzubringenden Beschichtung ausgehend von einem zum Auftragen der Dispersion bestimmten, vorzugsweise ortsfest gehaltenen Mittel möglich ist. In Verbindung mit einer die Dispersionsmenge und die Drehzahl des Tisches koordinierenden Steuerung ist eine einfache Variierung der Schichtdicke möglich.

Die Merkmale des Anspruchs 11 sind auf eine Konkretisierung des Mittels zum Auftragen der Dispersion auf die Seitenwandung des Reifens gerichtet. Wesentlich ist insbesondere in Verbindung mit einer vollständigen Einfärbung der Seitenwandung, dass die genannte Leitung stets eine schlitzförmige Austrittsöffnung aufweist, welche sich radial bezüglich des Reifens oberhalb desselben erstreckt. Dieses Mittel kann darüber hinaus vorteilhaft mit an sich bekannten Einrichtungen zur Durchflusssteuerung ausgerüstet sein, so dass die Menge an ausgetragener Dispersion variierbar ist.

Die genannte Leitung steht entsprechend den Merkmalen des Anspruchs 12 mit einem Reservoir in durchgängiger Verbindung, in welchem die zur Beschichtung bestimmte Dispersion bereitgestellt wird. Darüber hinaus kann die Leitung, soweit kein Treibmittel, z. B. ein Treibgas zum Einsatz kommt, mit Mitteln zur Förderung der Dispersion in Richtung ihrer Austrittsöffnung hin versehen sein, z. B. einer Förderpumpe. Auch diese Mittel können mit Hinblick auf eine Variierung des Durchflusses ausgestaltet sein, so dass gegebenenfalls in Verbindung mit einer Variierung der Drehzahl des Tisches die Dicke der aufgetragenen Beschichtung im Bedarfsfall geändert werden kann.

Man erkennt anhand der vorstehenden Ausführungen, dass mit der erfindungsgemäßen Vorrichtung ein konstruktiv einfaches Arbeitsmittel zur Verfügung gestellt ist, welches in seinen Arbeitsparametern an die projektierte Beschichtung anpassbar ist.

Falls entsprechend den Merkmalen des Anspruchs 13 Text oder Grafiken auf die Seitenwandung aufgetragen werden sollen, kann anstelle der genannten Austrittsöffnung der Leitung beispielsweise auch ein matrixartiger Druckerkopf gleicher radialer Erstreckung vorgesehen sein oder ein solcher, der nach Maßgabe der zu beschichtenden Fläche der Seitenwandung beweglich angeordnet ist.

Die Erfindung wird im Folgenden unter Bezugnahme auf die in den Zeichnungen schematisch wiedergegebenen Ausführungsbeispiele näher erläutert werden. Es zeigen:
Fig. 1 eine erste zur Durchführung des erfindungsgemäßen Verfahrens bestimmte Vorrichtung in einem Längsschnitt;
Fig. 2 eine zweite zur Durchführung des erfindungsgemäßen Verfahrens bestimmte Vorrichtung in einem Längsschnitt.

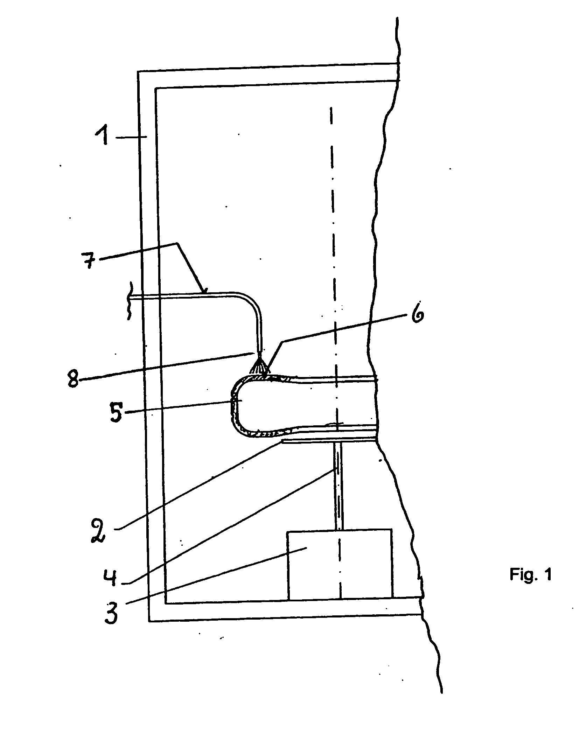

Es wird im Folgenden zunächst auf die Darstellung gemäß Fig. 1 Bezug genommen, in der mit 1 ist ein Kessel bezeichnet ist, innerhalb welchem eine zur Durchführung einer Vulkanisation geeignete Atmosphäre nach Maßgabe des gewählten Vulkanisationsverfahrens in an sich bekannter Weise einstellbar ist. Der Kessel 1 ist mit einer zeichnerisch nicht dargestellten schließbaren Öffnung versehen.

Innerhalb des Kessels 1 befindet sich ein kreisscheibenartiger, horizontal angeordneter Tisch 2, der mittels eines Elektromotors 3 um eine zentrale vertikale Achse 4 drehbar gelagert ist.

Der Tisch 2 ist mit zeichnerisch nicht dargestellten Einspann- bzw. Befestigungseinrichtungen zur Fixierung eines Reifens 5 versehen, dessen eine, hier obere Seitenwandung 6 zwecks Einfärbung mit einer Beschichtung zu überziehen ist.

Mit 7 ist eine, durch die Wandung 8 des Kessels 1 hindurchgeführte Leitung bezeichnet, die mit Abstand oberhalb der Seitenwandung 6 in einer Sprühdüse 8 endet, deren Austrittsöffnung schlitzartig mit der Maßgabe angelegt und angeordnet ist, dass sie die gesamte radiale Breite der Seitenwandung 6 überdeckt.

Die Leitung 7 steht mit einem zeichnerisch nicht dargestellten Reservoir mit unvernetztem Kautschuk in Verbindung, wobei es sich um Natur- oder auch Synthesekautschuk handeln kann. Dieser liegt in der Form einer Dispersion vor, in der der Kautschuk sowie ein Farbträger dispergiert sind und welche unter dem Druck eines Treibmittels, z. B. eines Treibgases steht, so dass ein sprühfähiger Zustand gegeben ist.

Zeichnerisch nicht dargestellt sind Durchflusssperr- bzw. Durchflussregelorgane, die dazu bestimmt sind, den Durchfluss durch die Leitung 7 zu öffnen bzw. freizugeben oder auch mengenmäßig zu variieren.

Zur Herstellung einer eingefärbten Beschichtung auf der Seitenwandung 6 wird der zu behandelnde Reifen 5 über die eingangs genannte Öffnung in den Kessel 1 eingebracht und auf dem Tisch 2 fixiert. Anschließend nach Schließen der genannten Öffnung des Kessels wird der Tisch 2 mittels des Elektromotors 3 in eine gleichförmige Umdrehung um die Achse 4 versetzt und eine Förderung der Dispersion über die Leitung 7 eingeleitet, so dass sich nach Maßgabe der Drehzahl des Tisches 2, des Austrittsquerschnitts der Sprühdüse 8 sowie des Druckes, unter dem die Dispersion steht, eine Beschichtung von gleichförmiger Dicke auf der Seitenwandung 6 ausbildet.

Der Innenraum des Kessels 1 ist nach Maßgabe der verfahrensabhängig benötigten Vulkanisationsatmosphäre konditioniert, so dass unter Entfernung des Dispersionsmittels der Kautschuk eine Vernetzung erfährt und gleichzeitig in einen fest haftenden Verbund mit dem Grundkörper des Reifens 5 tritt. Nachdem die Beschichtung im Wesentlichen werkstoffgleich mit dem Reifen anzusehen ist, ist die Darstellung einer zuverlässigen und dauerhaften Verbundwirkung gegeben und es kann schließlich der beschichtete Reifen dem Kessel 1 entnommen werden.

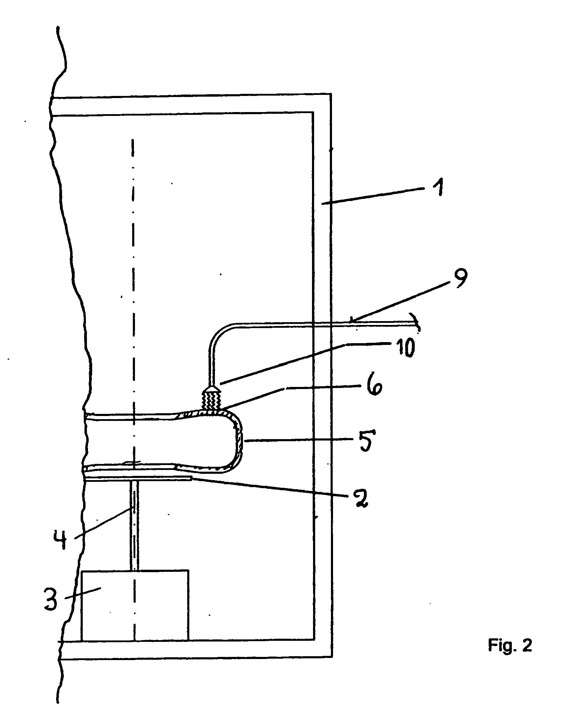

Die in Fig. 2 gezeigte Vorrichtung unterscheidet sich von der in Fig. 1 gezeigten Vorrichtung lediglich darin, dass eine durch eine Wandung des Kessels 1 geführte Leitung 9, die innerhalb des Kessels 1 mit Abstand oberhalb des Wandungsabschnitts 6 des Reifens 5 in einer Verteildüse 10 endet, aus der die Dispersion in einer lediglich fließfähigen Konsistenz austritt, so sich dass sich in Abwandlung der Vorrichtung gemäß Fig. 1 die Bereitstellung eines Treibgases erübrigt.

Die vorstehend skizzierte Vorrichtung ist dadurch gekennzeichnet, dass während des Auftragens der Dispersion der Reifen 5 relativ zu einer feststehenden, mit einer Sprühdüse 8, einer Verteildüse 10 oder einem vergleichbaren Austrittsorgan bewegt wird. Nachdem es bei Auftragungstechniken dieser Art letztendlich jedoch nur auf die Darstellung einer Relativbewegung zwischen dem Reifen 5 und dem Austrittsorgan ankommt, könnte gleichermaßen auch der Reifen 5 ortsfest gehalten und demgegenüber das Austrittsorgan beweglich angeordnet sein.

### Bezugszeichenliste:

- 1.: Kessel
- 2.: Tisch
- 3.: Elektromotor
- 4.: Achse
- 5.: Reifen
- 6.: Seitenwandung
- 7.: Leitung
- 8.: Sprühdüse
- 9.: Leitung
- 10.: Verteildüse

## Patentansprüche

1. Verfahren zum wenigstens örtlichen Einfärben einer Seitenwandung (6) eines Reifens (5) eines Fahrzeugs, wobei in einem Dispersionsmittel zumindest ein unvernetzter Kautschuk und ein Farbträger als disperse Phasen bereitgestellt werden, **dadurch gekennzeichnet, dass** die so dargestellte Dispersion unter Vulkanisationsbedingungen wenigstens örtlich auf die Seitenwandung (6) aufgetragen wird.

2. Verfahren nach Anspruch 1, **dadurch gekennzeichnet, dass** die Seitenwandung (6) im Wesentlichen vollständig eingefärbt wird.

3. Verfahren nach Anspruch 1 oder 2, **dadurch gekennzeichnet, dass** die Dispersion in einem mittels eines Treibmittels sprühfähigen Zustand zum Auftragen auf die Seitenwandung (6) bereitgestellt wird.

4. Verfahren nach Anspruch 1 oder 2, **dadurch gekennzeichnet, dass** die Dispersion in einem fließ- bzw. streichfähigen Zustand zum Auftragen auf die Seitenwandung (6) bereitgestellt wird.

5. Verfahren nach einem der Ansprüche 1 bis 4, **dadurch gekennzeichnet, dass** die Dispersion mit Faserelementen aus einem Kunststoff gemischt ist.

6. Verfahren nach einem der Ansprüche 1 bis 4, **dadurch gekennzeichnet, dass** die Dispersion mit Faserelementen aus einem Metall gemischt ist.

7. Verfahren nach einem der Ansprüche 1 bis 6, **dadurch gekennzeichnet, dass** die einzufärbende Seitenwandung (6) des Reifens (5) vor dem Aufbringen der Dispersion aufgeraut oder in sonstiger, einen Formschluss mit dem vernetzten Kautschuk der Dispersion verbessernden Weise strukturiert wird.

8. Verfahren nach einem der vorangegangenen Ansprüche 1 oder 3 bis 7, **dadurch gekennzeichnet, dass** bei einem lediglich örtlichem Einfärben des Reifens (5) die Dispersion in einem Siebdruckverfahren aufgetragen wird.

9. Verfahren nach einem der vorangegangenen Ansprüche 1, oder 3 bis 7, **dadurch gekennzeichnet, dass** bei einem lediglich örtlichen Einfärben des Reifens (5) die Dispersion mittels eines Druckerkopfes aufgetragen wird.

10. Vorrichtung zur Durchführung des Verfahrens nach einem der vorangegangenen Ansprüche 1 bis 9 mit einem Kessel (1), in dem um eine vertikale Achse (4) motorisch drehbar ein zum horizontalen Auflegen und Fixieren eines zu behandelnden Reifens (5) bestimmter und eingerichteter Tisch (2) angeordnet ist und mit einem Mittel zum Auftragen der Dispersion auf die einzufärbende Seitenwandung (6) des auf dem Tisch (2) aufliegenden und fixierten Reifens (5), **dadurch gekennzeichnet, dass** ferner Mittel zum Einstellen einer Vulkanisationsatmosphäre innerhalb des Kessels (1) vorgesehen sind.

11. Vorrichtung nach Anspruch 10, **dadurch gekennzeichnet, dass** das Mittel zum Auftragen der Dispersion durch eine Leitung (7, 9) dargestellt ist, dass die Leitung (7, 9) oberhalb der Seitenwandung (6) des auf dem Tisch (2) aufliegenden und fixierten Reifens (5) in einer schlitzartigen, nach Maßgabe der radialen Erstreckung der Seitenwandung (6) bemessenen Austrittsöffnung endet.

12. Vorrichtung nach Anspruch 10 oder 11, **dadurch gekennzeichnet, dass** die Leitung (7, 9) mit einem, die Dispersion bereitstellenden Reservoir in Verbindung steht.

13. Verwendung eines Verfahrens nach einem der Ansprüche 1 bis 9 zur Auftragung von Text oder Grafiken auf die Seitenwandung (6); eines Reifens (5) eines Fahrszeugs.

## Claims

1. Method for the at least local colouring of a sidewall (6) of a tyre (5) of a vehicle, wherein at least one non-vulcanised rubber and a colour substrate are provided as dispersed phases in a dispersion agent, **characterised in that** the thus produced dispersion is applied under vulcanisation conditions onto the sidewall (6) at least locally.

2. Method as claimed in Claim 1, **characterised in that** the sidewall (6) is substantially completely coloured.

3. Method as claimed in Claim 1 or 2, **characterised in that** the dispersion is provided in a condition capable of being sprayed by means of a blowing agent for application onto the sidewall (6).

4. Method as claimed in Claim 1 or 2, **characterised in that** the dispersion is provided in a condition capable of flowing or being spread for application onto the sidewall (6).

5. Method as claimed in any one of Claims 1 to 4, **characterised in that** the dispersion is mixed with fibre elements consisting of a synthetic material.

6. Method as claimed in any one of Claims 1 to 4, **characterised in that** the dispersion is mixed with fibre elements consisting of a metal.

7. Method as claimed in any one of Claims 1 to 6, **characterised in that** the sidewall (6) of the tyre (5) to be coloured is, prior to the application of the dispersion, roughened or structured in another manner improving a positive connection with the vulcanised rubber of the dispersion.

8. Method as claimed in any one of the preceding Claims 1 or 3 to 7, **characterised in that** in the case of a merely local colouring of the tyre (5) the dispersion is applied in a screen printing technique.

9. Method as claimed in any one of the preceding Claims 1 or 3 to 7, **characterised in that** in the case of a merely local colouring of the tyre (5) the dispersion is applied by means of a printhead.

10. Apparatus for implementing the method as claimed in any one of the preceding Claims 1 to 9, having a tank (1) in which a table (2), which is intended and adapted for the horizontal placement and attachment of a tyre (5) to be treated, is disposed so as to be motor-driven rotatably about a vertical axis (4), and having a means for applying the dispersion onto the sidewall (6), to be coloured, of the tyre (5) placed and attached onto the table (2), **characterised in that** means for setting a vulcanisation atmosphere within the tank (1) are also provided.

11. Apparatus as claimed in Claim 10, **characterised in that** the means for applying the dispersion is represented by a conduit (7, 9), **in that** the conduit (7, 9) terminates above the sidewall (6) of the tyre (5) placed and attached onto the table (2) in a slot-like outlet port dimensioned according to the radial extension of the sidewall (6).

12. Apparatus as claimed in Claim 10 or 11, **characterised in that** the conduit (7, 9) is connected to a reservoir providing the dispersion.

13. Use of a method as claimed in any one of Claims 1 to 9 for applying text or graphics onto the sidewall (6) of a tyre (5) of a vehicle.

## Revendications

1. Procédé pour la coloration au moins locale d'une paroi latérale (6) d'un pneu (5) d'un véhicule, au moins un caoutchouc non réticulé et un chromophore étant préparés en tant que phases dispersées dans un agent dispersant, **caractérisé en ce que** la dispersion ainsi constituée est appliquée au moins localement sur la paroi latérale (6) dans des conditions de vulcanisation.

2. Procédé selon la revendication 1, **caractérisé en ce que** la paroi latérale (6) est sensiblement colorée en totalité.

3. Procédé selon la revendication 1 ou la revendication 2, **caractérisé en ce que** la dispersion est préparée dans un état d'aptitude à la pulvérisation au moyen d'un gaz propulseur pour l'application sur la paroi latérale (6).

4. Procédé selon la revendication 1 ou la revendication 2, **caractérisé en ce que** la dispersion est préparée dans un état de fluidité ou d'aptitude au revêtement par brossage pour l'application sur la paroi latérale (6).

5. Procédé selon l'une des revendications 1 à 4, **caractérisé en ce que** la dispersion est mélangée à des éléments fibreux en matière synthétique.

6. Procédé selon l'une des revendications 1 à 4, **caractérisé en ce que** la dispersion est mélangée à des éléments fibreux en métal.

7. Procédé selon l'une des revendications 1 à 6, **caractérisé en ce que** la paroi latérale (6) du pneu (5) à colorer est rugosifiée avant application de la dispersion, ou structurée d'une autre manière améliorant une liaison mécanique avec le caoutchouc réticulé de la dispersion.

8. Procédé selon l'une des revendications 1 ou 3 à 7, **caractérisé en ce que** la dispersion est appliquée par procédé de sérigraphie pour une coloration exclusivement locale du pneu (5).

9. Procédé selon l'une des revendications 1 ou 3 à 7, **caractérisé en ce que** la dispersion est appliquée au moyen d'une tête d'impression pour une coloration exclusivement locale du pneu (5).

10. Dispositif pour l'exécution du procédé selon l'une des revendications 1 à 9, avec un autoclave (1), où est disposée une table (2) à rotation commandée par moteur autour d'un axe (4) vertical, prévue et équipée pour la mise en place horizontale et la fixation d'un pneu (5) à traiter, et avec un moyen d'application de la dispersion sur la paroi latérale (6) à colorer du pneu (5) reposant et fixé sur la table (2), **caractérisé en ce que** des moyens de conditionnement d'une atmosphère de vulcanisation à l'intérieur de l'autoclave (1) sont également prévus.

11. Dispositif selon la revendication 10, **caractérisé en ce que** le moyen d'application de la dispersion est constitué d'une conduite (7, 9), **en ce que** ladite conduite (7, 9) aboutit au-dessus de la paroi latérale (6) du pneu (5) reposant et fixé sur la table (2), avec un orifice de sortie en forme de fente, dimensionné en fonction de l'extension radiale de la paroi latérale (6).

12. Dispositif selon la revendication 10 ou la revendication 11, **caractérisé en ce que** la conduite (7, 9) est reliée à un réservoir d'alimentation en dispersion.

13. Utilisation d'un procédé selon l'une des revendications 1 à 9 pour l'application de textes ou de graphismes sur la paroi latérale (6) d'un pneu (5) d'un véhicule.
